# EUROPEAN PATENT SPECIFICATION

(11) **EP 0 556 037 B1**
(45) Date of publication and mention of the grant of the patent: **17.04.1996**
(21) Application number: 93300976.3
(22) Date of filing: 10.02.1993
(51) Int. Cl.: B64F 1/32, B65G 47/50

(54) **Baggage handling system**
System zur Handhabung von Gepäck
Système de manierment de bagages

(30) Priority: 14.02.1992 GB 9203223
(43) Date of publication of application: 18.08.1993
(73) Proprietor: GEC ALSTHOM LIMITED, Rugby, Warwickshire CV21 1TB (GB)
(72) Inventor: White, William Thomas, Oakham, Leicestershire LE15 8SU (GB)
(74) Representative: Hoste, Colin Francis

(56) References cited:
- FR-A- 1 573 662
- GB-A- 2 092 085
- GB-A- 2 224 147

## Description

This invention relates to a baggage handling system and a method of operating a baggage handling system, more especially for use at aircraft passenger check-in positions.

At the check-in positions of most major airports at the present time passengers deposit baggage to be carried in the hold of an aircraft on a short belt-type conveyor associated with a weighing apparatus. Then, after the check-in attendant has labelled the baggage with the destination, the conveyor is activated to transfer it on to a main conveyor serving a line of check-in desks, and this carries it to a central airside sorter, automatic bag recognition being accomplished by means of the coded tags attached to the baggage at check-in, and read by manually held bar-code readers. The baggage is subsequently loaded into containers, again manually, for transfer to the aircraft.

Such a system as described above suffers from two distinct disadvantages. Thus the main conveyor behind the check-in desks takes up floor space and limits access to the desks by the attendants. In addition, as baggage comes in many different shapes and sizes, it is difficult to provide fully automatic sorting.

An object of the invention is to provide a form of baggage handling system in which both of these difficulties are alleviated.

According to one aspect of the invention a baggage handling system for use at aircraft passenger check-in positions incorporates lift means capable of supporting baggage-conveying carts characterised in that the lift means comprises a pair of lifts, one of which is for raising an empty cart from a transfer position beneath the check-in position to a loading position at the check-in position and the second is for lowering a loaded cart from a lowering position at the check-in position to the transfer position, means being provided at the check-in position for transferring a cart, once loaded, from the loading position to the lowering position, and rails being provided at the transfer position enabling empty carts to be supplied to the first lift and loaded carts to be deposited by the second lift for conveying to a sorting or unloading position.

According to another aspect, the invention provides a method of operating a baggage handling system at aircraft passenger check-in positions the system including lift means for supporting baggage-conveying carts, being characterised in that the lift means comprises a pair of lifts, a transfer position beneath the check-in position, a loading position at the check-in position, a lowering position at the check-in position, a sorting or unloading position, and rails provided at the transfer position, the method comprising the steps of raising an empty cart from the transfer position to the loading position at the check-in position by means of one lift, lowering a loaded cart from the lowering position to the transfer position by means of the second lift, transferring a cart, once loaded, from the loading position to the lowering position, the method also involving the utilisation of the rails for conveying empty carts to the first lift and for conveying loaded carts deposited by the second lift to the sorting or unloading position.

By locating the rails beneath the check-in position the floor space behind the check-in desks can be kept clear. Moreover the cart itself can be labelled with the destination by the attendant, and as the system can utilise carts of a uniform design, with the coded destination information placed in the same position on the carts, fully automatic sorting can readily be achieved. Conveniently there are more than one lift means at the check-in position, for example two, so that a cart is available for loading when a loaded cart is being lowered.

Preferably a movable safety cover is arranged to extend over the loading position when a loaded cart is transferred to the lowering position, and whilst the empty first lift is lowered for receipt of a further cart, and raised again, with the further cart, to the loading position.

The safety cover may, for example, be in the form of a roller shutter. The shutter may also be arranged to extend over the lowering position, once a loaded cart has been lowered, and retained in that position until the respective lift, following the transfer of the loaded cart on to the rails, is again raised to the lowering position.

The carts may be driven along the rails by a linear motor drive, although other means of driving the carts could alternatively be used.

The carts may be provided with means for carrying coded information arranged to be read by co-operating trackside scanners, the imparted information being optionally fed to a route control means for causing the carts to be directed along corresponding routes on the track. The information may be in the form of a fixed barcode for identifying each individual cart. Then, at the time of loading baggage into a cart, information representing the passenger's destination can be fed into an inventory computer, and thereafter, at each trackside reading of the cart's identity, reference to the computer and to the flight information system will determine the cart's route.

Alternatively, information representing a passenger's destination can be applied to a label affixed to a cart at the loading position, this similarly being used, in conjunction with trackside scanners and an inventory computer, for routing the cart to the appropriate unloading position.

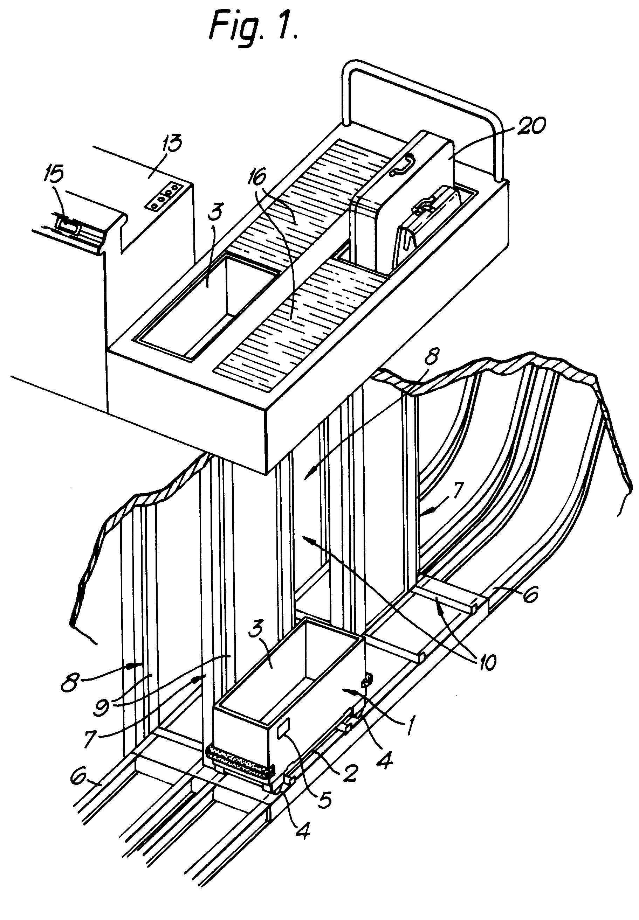

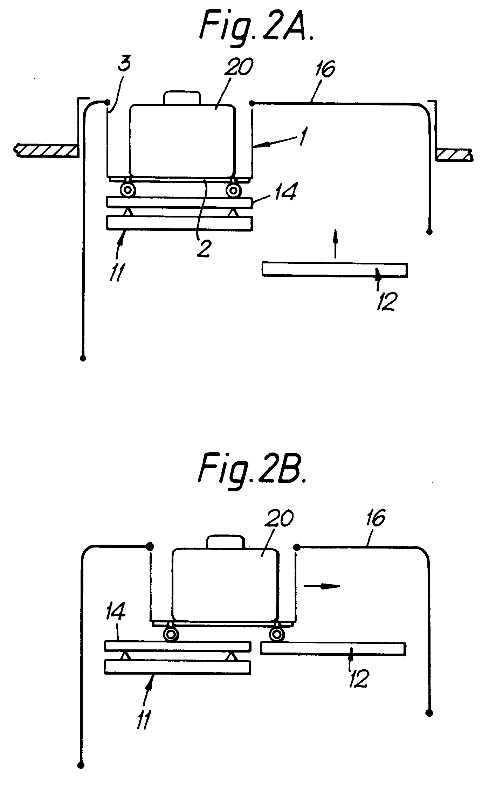

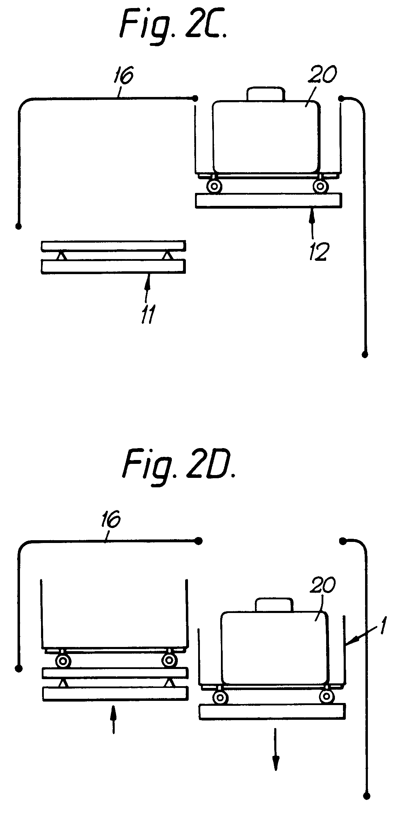

The invention will be further explained by describing, by way of example, with reference to Figures 1 and 2 of the accompanying drawings one form of baggage handling system in accordance with the invention.

In the drawings Figures 1 illustrates schematically a cut-away perspective view of part of the system adjoining a check-in position, and

Figure 2 illustrates diagrammatically the manner of operation of the system.

Referring first to Figure 1, each cart 1 has a rigidly constructed chassis 2 supporting an open-topped box 3 with approximate inside dimensions of 950mm long by 450mm wide by 350mm deep. This will accept a single bag of maximum dimensions, or two bags of average size and weight.

Each cart 1 is equipped with carrying and guidance wheels 4, a reactor plate (not shown) for a linear motor drive, and means, as at 5, for carrying coded information the purpose of which will be explained later. The carts run on twin I-beam tracks 6 mounted on cross-bearers (not shown) which also support linear motor units and sensing and braking equipment. Powered actuators are provided to guide carts into the required path at various diversion points.

At each check-point there are two identical sets of lift means 7, 8 each comprising a pair of hoists 9, 10. Each hoist incorporates a platform 11, 12 (Fig. 2) for supporting a baggage cart, and capable of being raised and lowered. The hoist 9 is designed to raise a baggage cart from the respective track 6 to a loading position adjacent a check-in desk 13.

Operation of the system will now be described mainly with reference to Figure 2. At the check-in position a departing passenger places baggage item(s) 20 into a cart 1 which is waiting at the loading position as shown in Figure 2A. A weighscale 14 associated with the hoist platform 11 automatically feeds a scale indicator 15 at the check-in desk 13 to display the baggage weight.

After weighing, the check-in attendant moves the cart to a labelling position on the platform 12 of the second hoist 10 as in Figure 2B. The space previously occupied by the cart is automatically covered by a roller-type safety shutter 16 and the platform 11 of the hoist 9 is lowered as shown in Figure 2C for receiving a further empty baggage cart, and is again raised to the loading position as in Figure 2D. When the passenger's bags have been labelled, the attendant operates a despatch button which imparts the appropriate coding to a baggage inventory computer, and/or a label on the cart, and the cart is lowered as shown in Figure 2D on to the track 6 below for its journey to the required departure gate.

The movement of the carts to and from the check-in area is interlocked with the safety shutter 16 to provide maximum safety to the passenger and the attendant.

The area behind the check-in desks is thus completely free of baggage conveyors, and each desk has its own independent island system receiving empty carts from the floor below and returning them, after loading on to the main trackway 6 for transport direct to the departure gate.

To ensure safety a fresh cart can only be raised when the safety shutter 16 is in the position shown in Figures 2C and 2D, and the shutter cannot return to the position as shown in Figure 2A until a loaded cart has been despatched. The lowering platform 12 cannot return to the cart despatching position until the safety shutter is returned to the platform shown in Figure 2A and a loaded cart cannot be moved from the loading position to the despatching position until an empty lowering platform 12 is in position.

It will be observed that with two sets of hoists it can be arranged for one cart to be in the loading position whilst another is in the lowering position as shown in Figure 1.

At each unloading position, arriving carts enter a queue such that the carts are presented in turn at the best position for immediate manual transfer to the waiting aircraft baggage container or baggage trolley for flight make-up. If carts are not emptied a visual and/or audible warning may be given. If available queuing space for a particular flight is filled further carts can be recirculated on a local loop until space is available. As each cart is unloaded the unloader operates a pedal or switch to release the cart for return to the check-in area.

Early bag storage on carts is provided, for example, by designating track loops to hold carts subject to one hour, two hours, three hours delay. At the designated hour each loop is cleared of carts, and the loop becomes available for re-designation. The released carts travel to their Gates and any not acceptable either re-circulate or return to store.

With suitable track routing the system may carry inbound bags to reclaim devices and transit bags to adjacent terminals.

It will, however, be realised that the system above described can be modified in various ways. For example, the carts themselves could be designed for automatic unloading at the appropriate gate position; this could be achieved, if desired, by making one side and base of the carts pivotable upwards and outwards on the receipt of an appropriate unload signal. Other variations are clearly possible. Thus whilst maximum benefit of the system is obtainable if the carts are automatically directed to respective gate positions, the carts may in some cases be fed to a common sorting position, where the baggage can be manually sorted and fed to approprate destination gates, or loaded directly on to trolleys for transport to the aircraft. Such an arrangement will still have the advantage of keeping the floor space behind the check-in desks free of baggage conveyors.

## Claims

1. A baggage handling system for use at aircraft passenger check-in positions incorporating lift means (7,8) capable of supporting baggage - conveying carts characterised in that the lift means comprises a pair of lifts (7,8), one of which lifts (7) is for raising an empty cart (1) from a transfer position beneath the check-in position to a loading position at the check-in position and the second (8) is for lowering a loaded cart (1) from a lowering position at the check-in position to the transfer position, means being provided at the check-in position for transferring a cart (1), once loaded, from the loading position to the lowering position, and rails being provided at the transfer position for enabling empty carts (1) to be supplied to the first lift (1) and loaded carts to be deposited by the second lift (8) for conveying to a sorting or unloading position.

2. A baggage handling system according to Claim 1 incorporating more than one lift means (7,8) associated with the check-in position for enabling an empty baggage-conveying cart (1) to be available for loading when a loaded cart (1) is being lowered.

3. A baggage handling system according to Claim 1 or Claim 2, wherein a movable safety cover (16) is arranged to extend over the loading position when a loaded cart (1) is transferred to the lowering position, and whilst the empty first lift is lowered for receipt of a further cart (1), and raised again, with the further cart (1), to the loading position.

4. A baggage handling system according to Claim 3 wherein the safety cover is in the form of a roller shutter (16).

5. A baggage handling system according to Claim 4 wherein the shutter (16) is arranged to extend over the lowering position, once a loaded cart has been lowered, and retained in that position until the respective lift, following the transfer of the loaded cart on to the rails, is again raised to the lowering position.

6. A baggage handling system according to any preceding claim incorporating a linear motor drive for driving the baggage-conveying carts (1) along the rails.

7. A baggage handling system according to any preceding claim in which each baggage-conveying cart (1) carries coded information (5) for identifying each individual cart.

8. A baggage handling system according to Claim 7 wherein the coded information (5) is in the form of a bar-code.

9. A baggage handling system according to any preceding claim in which each cart (1) is provided with means for supporting a label carrying data representing passenger destination information (5), which data is capable of being read by scanners at trackside stations for causing the cart (1) to be directed to an appropriate unloading position.

10. A method of operating a baggage handling system at aircraft passenger check-in positions the system including lift means (7,8) for supporting baggage-conveying carts (1), being characterised in that the lift means comprises a pair of lifts (7,8), a transfer position beneath the check-in position, a loading position at the check-in position, a lowering position at the check-in position, a sorting or unloading position, and rails provided at the transfer position, the method comprising the steps of raising an empty cart (1) from the transfer position to the loading position at the check-in position by means of one lift (7), lowering a loaded cart from the lowering position to the transfer position by means of the second lift (8), transferring a cart, once loaded, from the loading position to the lowering position, the method also involving the utilisation of the rails for conveying empty carts (1) to the first lift (7) and for conveying loaded carts (1) deposited by the second lift (8) to the sorting or unloading position.

11. A method according to Claim 10 which utilises more than one lift means (7,8) associated with the check-in position for enabling an empty baggage-conveying cart (1) to be available for loading when a loaded cart (1) is being lowered.

12. A method according to Claim 10 or 11 utilising a movable safety cover (16) which is arranged to be extended over the loading position when a loaded cart (1) is transferred to the lowering position, and whilst the empty first lift (8) is lowered for receipt of a further cart (1), and raised again, with the further cart (1), to the loading position.

13. A method according to any one of Claims 10, 11 or 12 involving the use of a linear motor drive for driving the baggage-conveying carts (1) along the rails.

14. A method according to any one of Claims 10, 11, 12 or 13 in which each baggage-conveying cart (1) carries coded information for identifying each individual cart.

## Patentansprüche

1. System zur Handhabung von Gepäck zur Verwendung an Flugpassagiercheck-in-Stellen, aufweisend Hebeeinrichtungen (7, 8), die imstande sind, Gepäckbeförderungskarren zu tragen,
**dadurch gekennzeichnet,**
daß die Hebeeinrichtungen ein Paar Hebeeinrichtungen (7, 8) umfassen, von denen eine (7) zum Anheben eines leeren Karrens (1) von einer Transferposition unterhalb der Check-in-Stelle zu einer Ladeposition an der Check-in-Stelle dient und die zweite (8) zum Absenken einer beladenen Karre (1) von einer Absenkungsposition an der Check-in-Stelle in eine Transferposition dient, wobei an der Check-in-Stelle Einrichtungen zur Überführung einer Karre (1), wenn diese beladen ist, aus der Ladeposition in die Absenkungsposition vorgesehen sind und Schienen an der Transferposition vorgesehen sind, die ermöglichen, daß leere Karren (1) der ersten Hebeeinrichtung (7) zugeführt werden und beladene Karren durch die zweite Hebeeinrichtung (8) zur Beförderung zu einer Sortier- oder Entladeposition abgesetzt werden.

2. System zur Handhabung von Gepäck nach Anspruch 1, aufweisend mehr als eine Hebeeinrichtung (7, 8), die der Check-in-Stelle zugeordnet ist, um zu ermöglichen, daß ein leerer Gepäckbeförderungskarren (1) zum Laden zur Verfügung steht, wenn ein beladener Karren (1) abgesenkt wird.

3. System zur Handhabung von Gepäck nach Anspruch 1 oder 2, in welchem eine bewegliche Sicherheitsabdeckung (16) so ausgelegt ist, daß sie sich über der Ladeposition erstreckt, wenn ein beladener Karren (1) zu einer Absenkungsposition überführt wird, und während die leere erste Hebeeinrichtung zur Entgegennahme eines weiteren Karrens (1) abgesenkt und wieder mit dem weiteren Karren (1) zur Ladeposition angehoben wird.

4. System zur Handhabung von Gepäck nach Anspruch 3, in welchem die Sicherheitsabdeckung in Form eines Rolladen (16) vorliegt.

5. System zur Handhabung von Gepäck nach Anspruch 4, in welchem der Rolladen (16) so ausgelegt ist, daß er sich über die Absenkungsposition erstreckt, sobald ein beladener Karren abgesenkt worden ist, und in dieser Position gehalten wird, bis die jeweilige Hebeeinrichtung, folgend auf die Überführung des beladenen Karrens auf den Schienen, wieder in die Absenkungsposition angehoben wird.

6. System zur Handhabung von Gepäck nach einem vorhergehenden Anspruch, aufweisend einen Linearmotorantrieb zum Antreiben der Gepäckbeförderungskarren (1) längs der Schienen.

7. System zur Handhabung von Gepäck nach einem vorhergehenden Anspruch, in welchem jede Gepäckbeförderungskarre (1) eine codierte Information (5) zur Identifizierung jeder individuellen Karre trägt.

8. System zur Handhabung von Gepäck nach Anspruch 7, in welchem die codierte Information (5) in Form eines Barcodes vorliegt.

9. System zur Handhabung von Gepäck nach einem vorhergehenden Anspruch, in welchem jeder Karren (1) mit Mitteln zum Tragen eines Etiketts versehen ist, welches Daten trägt, die die Passagierzielort-Information (5) repräsentieren, wobei diese Daten von Scannern an schienenstrangseitigen Stationen lesbar sind, um dafür zu sorgen, daß der Karren (1) zu einer geeigneten Entladeposition geleitet wird.

10. Verfahren zum Betreiben eines Gepäckhandhabungssystems an Flugpassagiercheck-in-Stellen, welches System Hebeeinrichtungen (7, 8) zum Tragen von Gepäckbeförderungskarren (1) umfaßt,
**dadurch gekennzeichnet,**
daß die Hebeeinrichtungen ein Paar Hebeeinrichtungen (7, 8) umfassen, eine Transferposition unterhalb der Check-in-Stelle, eine Ladeposition an der Check-in-Stelle, eine Absenkungsposition an der Check-in-Stelle, eine Sortier- oder Entladeposition und Schienen, die an der Transferposition vorgesehen sind, wobei das Verfahren die Schritte umfaßt: Anheben eines leeren Karrens (1) von der Transferposition in die Entladeposition an der Check-in-Stelle mittels einer Hebeeinrichtung (7), Absenken eines beladenen Karrens aus der Absenkungsposition in die Transferposition mittels der zweiten Hebeeinrichtung (8), Überführen einer Karre, sobald diese beladen ist, aus der Ladeposition in die Absenkungsposition, wobei das Verfahren auch die Benutzung von Schienen zur Beförderung von leeren Karren (1) zur ersten Hebeeinrichtung (7) und zur Beförderung beladener Karren (1), die von der zweiten Hebeeinrichtung (8) abgesetzt sind, zur Sortier- oder Entladeposition beinhaltet.

11. Verfahren nach Anspruch 10, welches mehr als eine Hebeeinrichtung (7, 8) umfaßt, die der Check-in-Stelle zugeordnet ist, um zu ermöglichen, daß ein leerer Gepäckbeförderungskarren (1) zum Laden zur Verfügung steht, wenn ein beladener Karren (1) abgesenkt wird.

12. Verfahren nach Anspruch 10 oder 11, benutzend eine bewegliche Sicherheitsabdeckung (16), die dazu ausgelegt ist, sich über die Ladeposition zu erstrecken, wenn ein beladener Karren (1) zur Absenkungsposition überführt wird, und während die leere erste Hebeeinrichtung (8) zur Entgegennahme eines weiteren Karrens (1) abgesenkt und mit dem weiteren Karren (1) wieder in die Ladeposition angehoben wird.

13. Verfahren nach einem der Ansprüche 10, 11 oder 12, beinhaltend die Verwendung eines Linearmotorantriebs zum Antreiben der Gepäckbeförderungskarren (1) längs der Schienen.

14. Verfahren nach einem der Ansprüche 10, 11, 12 oder 13, in welchem jeder Gepäckbeförderungskarren (1) codierte Information zur Identifikation jedes individuellen Karrens trägt.

## Revendications

1. Système de manutention de bagages destiné à être utilisé aux emplacements d'enregistrement des passagers d'un aéronef, comprenant des dispositifs élévateurs (7, 8) qui peuvent supporter des chariots de transport de bagages, caractérisé en ce que les dispositifs élévateurs comportent deux dispositifs élévateurs (7, 8), l'un (7) des dispositifs élévateurs étant destiné à soulever un chariot vide (1) d'une position de transfert qui se trouve sous l'emplacement d'enregistrement à une position de chargement à l'emplacement d'enregistrement, et le second (8) étant destiné à abaisser un chariot chargé (1) d'une position d'abaissement à l'emplacement d'enregistrement à la position de transfert, un dispositif étant placé à la position d'enregistrement pour le transfert d'un chariot (1), lorsqu'il a été chargé, de la position de chargement à la position d'abaissement, les rails étant placés à la position de transfert afin qu'ils permettent le transport des chariots vides (1) au premier dispositif élévateur (1) et le dépôt des chariots chargés par le second dispositif élévateur (8) afin qu'ils soient transportés à une position de tri ou de déchargement.

2. Système de manutention de bagages selon la revendication 1, comprenant plusieurs dispositifs élévateurs (7, 8) associés à la position d'enregistrement et destinés à permettre la disponibilité d'un chariot vide (1) de transport de bagages afin qu'il puisse être chargé lorsqu'un chariot chargé (1) a été descendu.

3. Système de manutention de bagages selon la revendication 1 ou 2, dans lequel un couvercle mobile (16) de sécurité est destiné à couvrir la position de chargement lorsqu'un chariot chargé (1) est transféré en position de descente et lorsque le premier dispositif élévateur vide est descendu pour la réception d'un chariot supplémentaire (1) puis soulevé avec le chariot supplémentaire (1) vers la position de chargement.

4. Système de manutention de bagages selon la revendication 3, dans lequel le couvercle de sécurité est sous forme d'un obturateur à rouleaux (16).

5. Système de manutention de bagages selon la revendication 4, dans lequel l'obturateur (16) est destiné à être placé au-dessus de la position de descente, lorsqu'un chariot chargé a été descendu, et est retenu dans cette position jusqu'à ce que le dispositif élévateur respectif, après le transfert du chariot chargé sur les rails, soit à nouveau soulevé vers la position de descente.

6. Système de manutention de bagages selon l'une quelconque des revendications précédentes, comprenant un dispositif d'entraînement à moteur linéaire destiné à entraîner les chariots (1) de transport de bagages le long des rails.

7. Système de manutention de bagages selon l'une quelconque des revendications précédentes, dans lequel chaque chariot (1) de transport de bagages porte des informations codées (5) d'identification de chaque chariot individuel.

8. Système de manutention de bagages selon la revendication 7, dans lequel les informations codées (5) sont sous forme d'un code à barres.

9. Système de manutention de bagages selon l'une quelconque des revendications précédentes, dans lequel chaque chariot (1) comporte un dispositif de support d'une étiquette portant des données représentant les informations (5) de destination de passagers, les données pouvant être lues par des lecteurs placés à des postes adjacents aux voies de manière que le chariot (1) soit dirigé à une position convenable de déchargement.

10. Procédé de mise en oeuvre d'un système de manutention de bagages aux emplacements d'enregistrement des passagers d'un aéronef, le système comprenant des dispositifs élévateurs (7, 8) de support de chariots (1) de transport de bagages, caractérisé en ce que les dispositifs élévateurs comprennent deux dispositifs élévateurs (7, 8), une position de transfert qui se trouve sous la position d'enregistrement, une position de chargement à l'emplacement d'enregistrement, une position de descente à l'emplacement d'enregistrement, une position de tri ou de déchargement, et des rails placés à la position de transfert, le procédé comprenant les étapes suivantes : le soulèvement d'un chariot vide (1) de la position de transfert à la position de chargement à l'emplacement d'enregistrement à l'aide d'un dispositif élévateur (7), la descente d'un chariot chargé de la position de descente à la position de transfert à l'aide du second dispositif élévateur (8), le transfert d'un chariot, après chargement, de la position de chargement à la position de descente, le procédé comprenant aussi l'utilisation des rails pour le transport de chariots vides (1) vers le premier dispositif élévateur (7) et le transport des chariots chargés (1) déposés par le second dispositif élévateur (8) à la position de tri ou de déchargement.

11. Procédé selon la revendication 10, qui utilise plusieurs dispositifs élévateurs (7, 8) associés à l'emplacement d'enregistrement de manière qu'un chariot (1) de transport de bagages qui est vide soit disponible pour le chargement lorsqu'un chariot chargé (1) est descendu.

12. Procédé selon la revendication 10 ou 11, mettant en oeuvre un couvercle mobile (16) de sécurité destiné à être placé au-dessus de la position de chargement lorsqu'un chariot chargé (1) est transféré à la position de descente et lorsque le premier dispositif élévateur (8) est abaissé pour la réception d'un chariot supplémentaire (1) et pour son soulèvement avec le chariot supplémentaire (1) en position de chargement.

13. Procédé selon la revendication 10, 11 ou 12, comprenant l'utilisation d'un dispositif d'entraînement à moteur linéaire pour l'entraînement des chariots (1) de transport de bagages le long des rails.

14. Procédé selon la revendication 10, 11, 12 ou 13 dans lequel chaque chariot (1) de transport de bagages porte des informations codées d'identification de ce chariot.
